# EUROPÄISCHE PATENTSCHRIFT

(11) **EP 1 254 758 B1**
(45) Veröffentlichungstag und Bekanntmachung des Hinweises auf die Patenterteilung: **11.02.2004**
(21) Anmeldenummer: 01110751.3
(22) Anmeldetag: 03.05.2001
(51) Int. Cl.: B29C 65/10

(54) **Handschweissgerät**
Hand-held welding device
Dispositif de soudage à main

(43) Veröffentlichungstag der Anmeldung: 06.11.2002
(73) Patentinhaber: Leister Process Technologies, 6060 Sarnen (CH)
(72) Erfinder: Zurmühle, Walter, 6056 Kägiswil (CH); Von Wyl, Bruno, 6056 Kägiswil (CH)
(74) Vertreter: Klocke, Peter, Dipl.-Ing.

(56) Entgegenhaltungen:
- CH-A- 688 581
- DE-U- 1 942 722
- FR-A- 1 431 056
- US-A- 4 737 213
- US-A- 5 399 226
- US-B1- 6 170 550
- "Documentation 12B / Leister-Variant / Leister-Kombi" , LEISTER , FRANCE XP002178787 * Seite 1 - Seite 20; Abbildungen *
- "Warmgas-Schweissgerät "Plastherm" (DBGM)" , MESSER GRIESHEIM GMBH , GERMANY XP002178788 001801 * Seite 1 - Seite 4; Abbildungen 2,3 *

## Beschreibung

Die vorliegende Erfindung betrifft ein Handschweißgerät mit einer Antriebseinrichtung und einem Heizgerät zum Verschweißen von Kunststoffdichtungsbahnen und Folien, das mit einer Heizeinrichtung zum Erwärmen der zu verschweißenden Kunststoffdichtungsbahnen und Folien ausgerüstet ist.

Handgeräte zum Verschweißen von Kunststoffdichtungsbahnen und Folien sind allgemein bekannt und weisen in der Regel ein längliches Gehäuse zur Aufnahme der notwendigen Steuerungs- und Antriebseinheiten. Je nach Ausbildung der Heizeinrichtung wird unterteilt in Heißluft-Heizgeräte oder Heizkeil-Heizgeräte und die Kombinationen daraus. Bei den Heißluft-Heizgeräten wird Luft erhitzt und mittels einer besonders ausgestalteten Schweißdüse das zu verschweißende Material und -je nach Ausbildung- auch die Düse erhitzt. Die Lufterzeugung kann in dem Gehäuse des Heizgerätes oder auch extern erfolgen. Bei letzterem wird die Luft mittels eines Schlauches der in dem Heizgerät angeordneten Heizeinrichtung zugeführt. Bei den Heizkeilgeräten erfolgt die Erwärmung eines Heizkeils zum Verschweißen des Materials elektrisch. Das Andrücken der erwärmten Kunststoffbahnen erfolgt mittels eines in der anderen Hand des Benutzer zu führenden Handrollers.

Derartige Schweißgeräte werden insbesondere dann eingesetzt, wenn mit sogenannten Schweißautomaten, die sich selbstständig vorwärtsbewegen, nicht gearbeitet werden kann. Das ist dann der Fall, wenn es sich um vergleichsweise kurze Schweißnähte handelt, die Schweißnaht aufgrund von Hindernissen, wie beispielsweise Wänden, für einen Schweißautomat aufgrund seiner Breite nicht zugänglich ist, beim Schweißen von längeren vertikalen oder fast vertikalen Flächen oder auch beim Überkopfschweißen, insbesondere im Tunnelbau.

Für das Schweißen von Kunststoffdichtungsbahnen und Folien an vertikalen oder fast vertikalen Flächen in einer maximalen Höhe von circa 20 cm vom Boden besteht die Möglichkeit, dies mittels einer Vorrichtung gemäß der CH 688 581 A5 durchzuführen. Diese Vorrichtung weist ein Chassis auf, das eine Antriebseinrichtung aufweist und das Chassis auf dem Boden entlang der zu verschweißenden Fläche bewegt. Die Schweißeinrichtung wird von Hand gegen die senkrecht oder geneigte Wand gedrückt, um mittels einer mitlaufenden Anpressrolle die von der Heizeinrichtung erwärmten Kunststoffbahnen zusammenzupressen.

Der vorliegenden Erfindung liegt daher die Aufgabe zugrunde, eine Möglichkeit vorzuschlagen, die einen kontinuierlichen Schweißablauf sowie eine bessere Schweißqualität beim Verschweißen von Kunststoffdichtungsbahnen und Folien mittels Handschweißgeräten erlaubt.

Diese Aufgabe wird erfindungsgemäß durch ein Handschweißgerät mit den Merkmalen des Anspruchs 1 gelöst. Weitere vorteilhafte Ausgestaltungen sind den Unteransprüchen entnehmbar.

Gemäß der Erfindung weist das Handschweißgerät eine Antriebseinrichtung mit einem länglichen Gehäuse auf, das ausreichend stabil ausgebildet ist, damit die beim Verschweißen erforderliche Fügekraft in vertikaler Richtung zu den Kunststoffdichtungsbahnen bzw. Folien auf diese aufbringbar ist. Die Krafteinleitung auf die Materialen erfolgt über eine Andrück- und Antriebsrolle, die an dem unteren Ende des Gehäuses angeordnet ist und mittels eines in dem Gehäuse angeordneten Motors angetrieben wird. Die Antriebseinrichtung weist außerdem eine Kupplungseinheit zum Verbinden des Gehäuses mit dem Heizgerät auf. Die Kupplungseinheit ist derart ausgestaltet, dass die Längsachse des Gehäuses der Antriebseinrichtung sowie des Heizgeräts im Wesentlichen parallel verlaufen. Vorzugsweise ist die der Abstand der Andrück- und Antriebsrolle sich in dem in Bezug zur Heizeinrichtung in der Höhe und/oder im Abstand einstellbar. Die Andrück- und Antriebsrolle kann direkt in der Längsachse des Gehäuses oder auch versetzt dazu angeordnet sein.

Durch die im Wesentlichen parallele Anordnung der Antriebseinrichtung zu dem üblicherweise ebenfalls länglichen handgeführten Heizgerät kann eine Verschweißung von Kunststoffdichtungsbahnen und Folien möglichst nahe an den Kanten und Ecken bei rechtwinklig aufeinanderstehenden Flächen auch mit dieser Einrichtung durchgeführt werden. Der minimale Abstand für die Schweißnaht von einer Wand wird dabei von dem Durchmesser des Heizgeräts bestimmt. Je größer die Neigung der Längsachsen des Gehäuses und des Heizgeräts zueinander sind, um so größer wird auch der Abstand der mit dieser Einrichtung noch zu verschweißenden Naht von der Wand. Die Antriebseinrichtung weist eine einzige Rolle auf, die sowohl die Andrück- als auch die Antriebsrolle bildet. Durch die Verbindung des Gehäuses mit dem Heizgerät über die Kupplungseinheit ist die Antriebseinrichtung mit dem Heizgerät fest verbunden und die Fügekraft wird durch Druck auf das Gehäuse der Antriebseinrichtung in vertikaler Richtung auf die Kunststoffdichtungsbahnen und Folien aufgebracht, nachdem diese durch das Heizgerät zuvor im Bereich der sich überlappenden Enden der zu verschweißenden Kunststoffdichtungsbahnen und Folien entsprechend erhitzt wurden. Die gesamte Anordnung ermöglicht dadurch auch ein einfacheres Schweißen mit besserer Qualität bei senkrechten Wänden oder im Tunnelbau.

Durch die Antriebseinrichtung ist somit ein handgeführtes Schweißen mit einer besseren Schweißqualität und höheren Geschwindigkeit möglich. Entsprechend der Bewegung der Andrück- und Antriebsrolle werden auch das Heizgerät und die entsprechende Heizeinrichtung, beispielsweise Düse oder Heizkeil, kontinuierlich mitbewegt. Die Drehgeschwindigkeit der Andrück- und Antriebsrolle kann dabei variabel auf das Material eingestellt werden, wobei gemäß einer Ausbildung eine Regeleinrichtung vorgesehen ist, die auch bei nachlassendem Druck durch den Bediener die Drehzahl konstant hält. Es findet damit eine Prozessoptimierung statt, da sich der Bediener nur noch auf die Druckaufbringung konzentrieren muss, während der zweite Schweißparameter Geschwindigkeit durch die Antriebseinrichtung und der dritte Parameter Temperatur durch das Heizgerät (in bekannter und üblicher Art und Weise) geregelt oder gesteuert wird:

Durch den Einsatz der Antriebseinrichtung ergibt sich auch in optischer Hinsicht eine Qualitätsverbesserung, die sich insbesondere beispielsweise bei Schwimmbädern bemerkbar macht, da gegenüber einer mit einem Handroller bearbeiten Schweißnaht die Oberfläche gleichmäßiger aussieht und die beim Handroller häufig auftretenden, zur Schweißnaht schrägen Streifen durch Herausrollen der Schmelze nicht auftreten.

Vorzugsweise befindet sich seitlich der Andrück- und Antriebsrolle eine Führungshilfe zu Verringerung der Verkantung der Andrück- und Antriebsrolle während des Schweißablaufes. Dies kann beispielsweise durch einen Stützring oder eine zusätzliche Stützrolle erfolgen. Damit wird sichergestellt, dass bei der Bewegung der Antriebseinrichtung eine möglichst große Andrückfläche auf das Material wirkt und der Bediener durch den aufgrund des Aufbaus relativ große Hebelarm nicht die Gesamteinrichtung zu stark kippt und damit die Schweißnaht an Qualität einbüßt.

In einer weiteren Ausbildung ist die Andrück- und Antriebsrolle pendelnd gelagert. Damit können leichte Kippungen durch den Bediener beim Aufbringen der Fügekraft ausgeglichen werden. Insbesondere ist dann eine Stützhitfe nicht erforderlich. Die Pendellagerung kann beispielsweise entsprechend der Lagerung der in der EP 949057. A1 beschriebenen Pendelrolle realisiert werden. Eine andere Möglichkeit besteht in der Ausbildung eines Pendelkopfes in der Längsachse des Gehäuses mit entsprechenden Winkelgetrieben zur Übertragung der Antriebskraft.

Gemäß einer weiteren vorteilhaften Ausgestaltung ist der Winkel zwischen Andrück- und Antriebsrolle und Überlappungskante einstellbar. Bei der damit leicht schrägen Vorwärtsbewegung wird der Bediener gezwungen, durch seitlichen Druck dem entgegen zu wirken. Damit wird bei der Vorwärtsbewegung das Material in Richtung Überlappungskante gezogen und eine Wellenbildung vermieden.

Gemäß einer besonders bevorzugten Ausführungsform ist die Andrück- und Antriebsrolle federnd gelagert, so dass beim Aufbringen der Fügekraft die Heizeinrichtung sich an Unebenheiten anpassen kann und die Heizeinrichtung nicht mit dieser Fügekraft belastet wird. Die federnde Lagerung kann entweder durch direkte federnde Lagerung der Andrück- und Antriebsrolle oder durch die federnde Lagerung des mit der Andrück- und Antriebsrolle starr verbundenen Gehäuses der Antriebseinrichtung gegenüber dem Heizgerät erfolgen.

Nachfolgend wird die Erfindung anhand von Ausführungsbeispielen in Verbindung mit den begleitenden Zeichnungen näher erläutert. Es stellen dar:
- Figur 1: die schematische Darstellung der Frontansicht eines Handschweißgeräts mit einer Antriebseinrichtung und einem Heizgerät;
- Figur 2: die Seitenansicht der Anordnung gemäß Figur 1;
- Figur 3: die schematische Darstellung entsprechend Figur 1 mit einem Pendelkopf, über den die Andrück- und Antriebsrolle pendelnd gelagert und angetrieben wird;
- Figur 4: die vergrößerte perspektivische Ansicht der Schweißdüse von oben;
- Figur 5: die perspektivische vergrößerte Darstellung der Schweißdüse von unten und
- Figur 6: die vergrößerte Stirnansicht der Schweißdüse mit Andrückrolle.

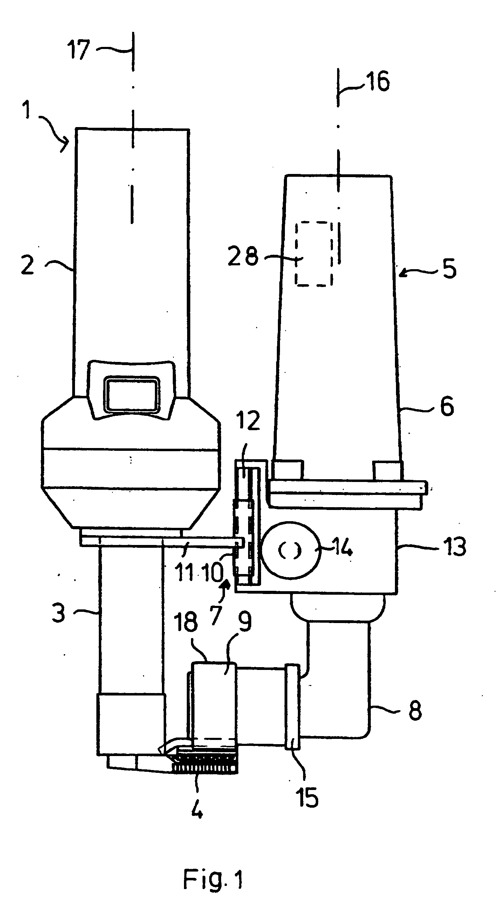

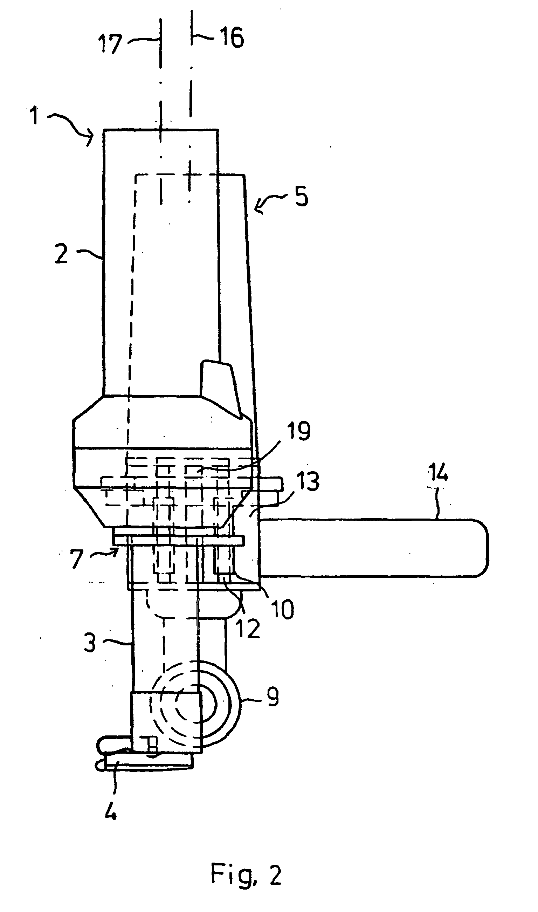

Die Figuren 1 und 2 zeigen ein Heißluft-Schweißgerät 1, das in dem Gehäuse 2 ein Gebläse aufweist, das die durch das Heizrohr 3 und die Düse 4 bläst. In bekannter Art und Weise wird durch die Heißluft die Düse 4 sowie die miteinander zu verschweißenden Materialien erwärmt, wobei die Kanten der zu verschweißenden Materialien sich überlappen. Des weiteren ist in den Figuren 1 und 2 eine Antriebseinrichtung 5 mit einem ebenfalls länglichen Gehäuse 6 dargestellt, die über eine Kupplungseinheit 7 mit dem Heißluft-Schweißgerät 1 verbunden ist. Bei dem in den Figuren 1 und 2 dargestellten Heißluftschweißgerät 1 und Antriebseinrichtung 5 verläuft die Längsachse 16 der Antriebseinrichtung 5 parallel zur Längsachse 17 des Heißluftschweißgeräts 1. Bei dieser Anordnung kann gegenüber anderen Stellungen der Längsachsen 16, 17 zueinander am nächsten an Hindernisse, beispielsweise vertikale Wände herangefahren werden.

Am unteren Ende 8 ist das Gehäuse 6 abgewinkelt und trägt am freien Ende eine Andrück- und Antriebsrolle 9. In dem Gehäuse 6 und dem abgewinkelten unteren Gehäuseende 8 befinden sich ein nicht dargestellter handelsüblicher Motor bzw. ein entsprechendes handelsübliches Winkelgetriebe. Bei einer Anordnung des Motors im Bereich des unteren Endes 8 des Gehäuses 6 erübrigt sich gegebenenfalls das Getriebe oder es wird ein dem Fachmann geläufiges Getriebe verwendet. In dem Gehäuse 6 befindet sich, schematisch angedeutet, auch eine Regeleinrichtung 28, die dafür sorgt, dass die Drehzahl des Motors unabhängig von der von dem Bediener aufgebrachten Fügekraft konstant bleibt. Die Andrückund Antriebsrolle 9 ist, wie auch bei den bekannten Handandrückrollen, auswechselbar, so dass der Gummibelag erneuert oder durch andere Materialen oder Beläge mit anderen Härten oder Oberflächenausgestaltungen, wie z.B. Perforierung, ersetzt werden kann.

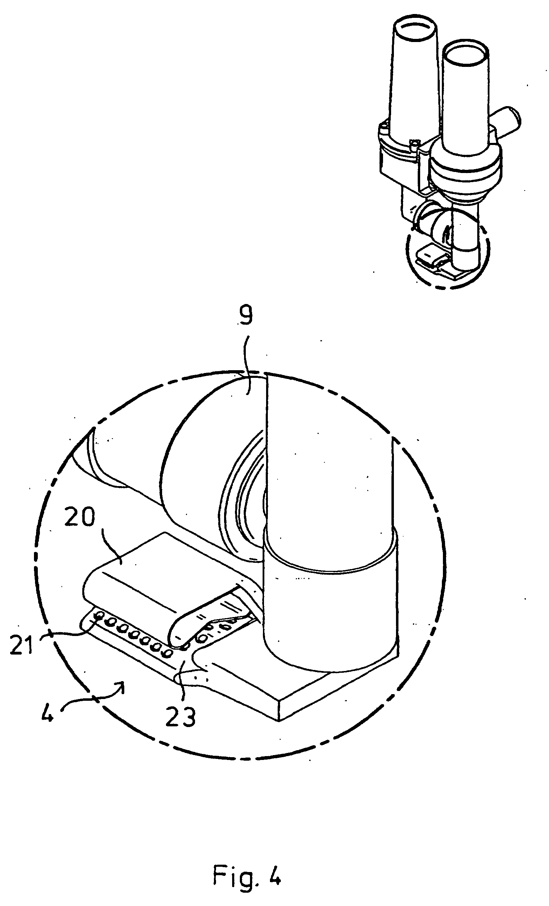

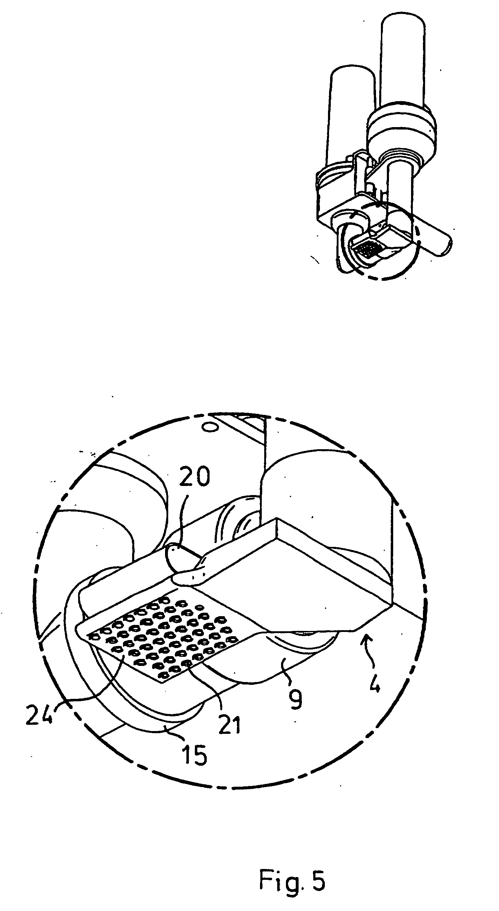

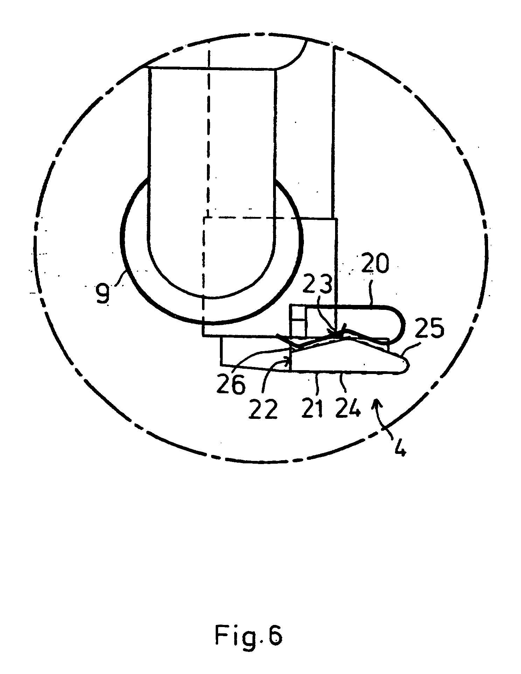

In dem Ausführungsbeispiel ist die Kupplungseinheit 7 über einen Steg 11, der fest an dem Heizrohr 3 angebracht ist, mit dem Heißluft-Schweißgerät verbunden. Das andere Ende des Steges 11 ist über Hülsen 10, die auf einer Stange 12 in axialer Richtung beweglich sind, sowie eine Schraubenfeder 19 (Figur 2) federnd an einem Flansch 13 gelagert. Die Federkraft gewährleistet bei den nachfolgend im Zusammenhang mit den Figuren 4 bis 6 beschriebenen Düsen unabhängig von der aufgebrachten Fügekraft einen konstanten Druck der Düse auf das untere Material und bewirkt damit die gewünschte Kontaktierung und Aufrauung. Das Gehäuse der Antriebseinrichtung kann gegenüber dem Flansch 13 der Kupplungseinheit 7 gedreht werden, so dass ein beliebiger Winkel der Andrückund Antriebsrolle 9 zu der Düse 4 bzw. der Schweißkante der Materialien eingestellt werden kann. Über die Kupplungseinheit 7 ist die Andrück- und Antriebsrolle 9 im Abstand zu der Schweißdüse 4 einstellbar. Es kann auch eine feste Einstellung in der Höhe erfolgen. An dem Flansch 13 befindet sich außerdem ein Haltegriff 14, mit dem die gewünschte Fügekraft aufgebracht werden kann.

Parallel zu der Andrück- und Antriebsrolle 9 befindet sich mit Abstand eine drehbare Stützrolle 15 als Führungshilfe. Die Stützrolle 15 kann selbstverständlich auch noch weiter entfernt von der Andrück- und Antriebsrolle 9 als in der Figur dargestellt angeordnet sein. So ist es auch möglich, die Stützrolle 15 in der Figur 1 rechts neben dem Gehäuse 6 anzuordnen. Der Durchmesser der Stützrolle 15 ist geringfügig geringer als der der Andrück- und Antriebsrolle 9, um die Fügekraft der Andrück- und Antriebsrolle 9 zu gewährleisten. Die Auflagefläche der Stützrolle 15 verläuft in dem Ausführungsbeispiel parallel zur Auflagefläche 18 der Andrück- und Antriebsrolle 9. Unter gewissen Bedingungen kann auch eine Schrägstellung der Stützrolle vorteilhaft sein.

In dem Gehäuse 6 befindet sich, schematisch angedeutet, eine Regelungseinrichtung, mittels der u.a. die Drehzahl der Andrück- und Antriebsrolle 9 auch bei nachlassender Fügekraft konstant gehalten wird.

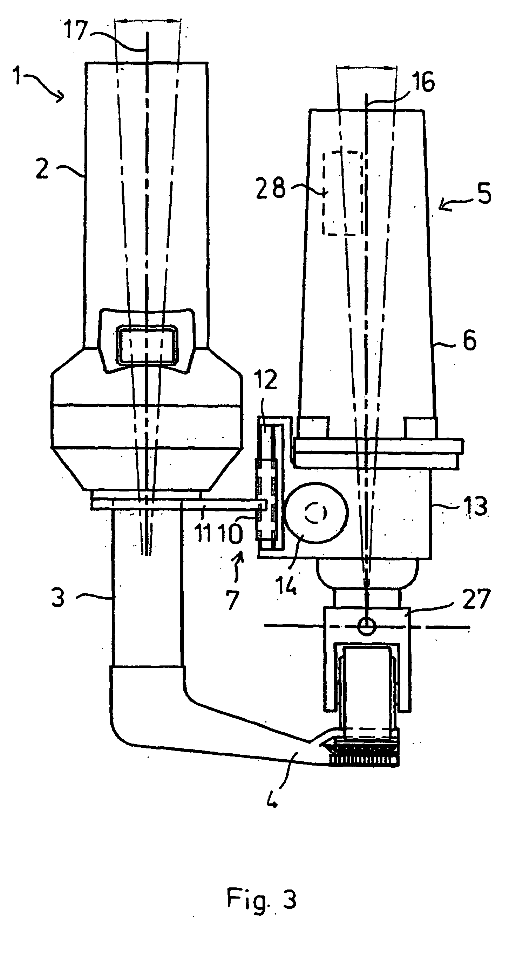

Figur 3 zeigt eine Ausführungsform mit einem Pendelkopf 27, an dem eine Andrück- und Antriebsrolle 9 beidseitig gelagert ist. Auch sie wird entsprechend von dem Motor angetrieben. Damit ist die Andrück- und Pendelrolle in der Längsachse 16 des Gehäuses 6 angeordnet. Entsprechend ist die Düse 4 verlängert, damit die Andrück- und Antriebsrolle 9 der Düse 4 beim Schweißen nachläuft. Bei dieser Ausführungsform erübrigt sich eine Stützrolle 15. Die Fügekraft wird auch bei leichtem Kippen durch den Bediener, wie in den Figuren durch die Pfeile angedeutet, in ausreichendem Maße auf die Schweißnaht gebracht. Durch die starre Verbindung über die Kupplungseinheit 7 wird die gesamte Anordnung um die Längsachsen 16, 17 gekippt.

In den Figuren 4 bis 6 ist die Düse 4 in verschiedenen Ansichten zur Verdeutlichung dargestellt. Die Düse 4 ist, wie aus den Figuren ersichtlich, dreieckförmig ausgebildet, wobei das Führungsblech 20 auf seiner Unterseite der zeltdachförmigen Ausbildung der Düse 4 entspricht. Sowohl auf der Oberseite 23 als auch auf der Unterseite 24 weist die Düse 4 Erhebungen 21, vorzugsweise scharfkantige Erhebungen, zum Aufrauen der Materialien auf. Durch die Erhebungen 21 auf der Oberseite 23 wird das obere Material und durch die Erhebungen 21 auf der Unterseite 24 das untere Material in der Überlappung aufgeraut. Durch die durch die Öffnung 22 der Düse austretende heiße Luft wird die gesamte Düse ebenfalls erhitzt. Bei der ersten Kontaktierung der Materialien mit der Düse erfolgt eine mechanische Aufrauung der noch kalten Folie an der Schräge 25. Im weiteren Verlauf wird die Folie durch die Berührung der heißen Oberseite 23 der Düse 4 erwärmt, so dass das Material entspannt und flexibler wird. Damit wird im weiteren Verlauf auf der Schräge 26 eine stärkere Aufrauung durch das Eindringen der Erhebungen 21 in das nun weichere Material erreicht und im Anschluss daran eine optimale Verschweißung bewirkt. Die der Düse 4 nachlaufende Andrück- und Antriebsrolle 9 sorgt für den notwendigen Druck, insbesondere auf das über die Fläche der Schräge 26 der Düse 4 geführte Materials, so dass in dieser Phase die gewünschte Aufrauung vor der Verschweißung erreicht wird. Eine entsprechende Materialvorbereitung kann auch mittels einer keilförmigen, nicht dargestellten Düse erreicht werden, bei der zwischen den beiden schrägen Flächen 25 und 26 gemäß der Figuren 4 bis 6 auf der Oberseite 23 eine gerade Fläche ohne Erhebungen angeordnet ist, um die Phase der Materialentspannung und Erwärmung zu verlängern. Auf dieser Fläche hat die Düse eine Heizkeilwirkung und bewirkt eine Plastifizierung des Materials. Dadurch wird auf der nachfolgenden Schräge 26 ein tieferes Eindringen der Erhebungen 23 erreicht. Dies ergibt gegenüber den bekannten Düsen, die auf der Oberseite nur eine im Wesentlichen waagerecht angeordnete Fläche mit Aufraueinrichtungen aufweisen, eine Qualitätsverbesserung hinsichtlich der Schweißnahtfestigkeit.

Mit der vorstehend beschriebenen Vorrichtung können somit Verschweißungen von Kunststoffdichtungsbahnen und Folien an schrägen und senkrechten Wänden, über Kopf, in U-förmigen Vertiefungen bzw. Rinnen sowie in Eckbereichen einfacher, schneller und genauer und somit qualitativ besser hergestellt werden. Bei den in den Figuren dargestellten Beispielen handelt es sich um Darstellungen einer möglichen bevorzugten Anordnung. Selbstverständlich ist es möglich, auch andere Schweißnähte bzw. Verschweißungen von Bahnen bzw. Folien mit der dargestellten Anordnung auszuführen. Die Antriebseinrichtung kann vorteilhafterweise an die vielen bereits bestehenden Heißluft-Schweißgeräte nachträglich angebaut werden. Anstelle des in der Figur dargestellten Heißluft-Schweißgerätes kann ebenso eine Anordnung verwendet werden, die an eine externe Lufterzeugungseinrichtung angeschlossen ist. Auch kann die Antriebseinrichtung an ein Heizgerät angeschlossen werden, bei dem die Heizeinrichtung als Heizkeileinrichtung ausgebildet ist, die elektrisch erhitzt wird. Die einzelnen Antriebe, sowie elektrische Steuerung, Regelung und dergleichen sind allgemein bekannt und können entsprechend dem Anwendungsfall variiert werden.

## Patentansprüche

1. Handschweißgerät mit einer Antriebseinrichtung (5) und einem Heizgerät (1) zum Verschweißen von Kunststoffdichtungsbahnen und Folien, das mit einer Heizeinrichtung zum Erwärmen der zu verschweißenden Kunststoffdichtungsbahnen und Folien ausgerüstet ist, **dadurch gekennzeichnet, dass** die Antriebseinrichtung (5) ein längliches Gehäuse (6) mit einer am unteren Ende (8) angeordneten Andrück- und Antriebsrolle (9) worüber die Fügekraft in vertikaler Richtung zu den Kunststoffdichtungsbahnen und Folien auf diese aufbringbar ist, einen in dem Gehäuse (6, 8) angeordneten Motor zum Antreiben der Andrück- und Antriebsrolle (9), und eine Kupplungseinheit (7) zum Verbinden des Gehäuses (6, 8) mit dem Heizgerät (1), derart, dass die Längsachsen (16, 17) des Gehäuses (6, 8) und des Heizgeräts (1) im Wesentlichen parallel verlaufen, aufweist.

2. Handschweißgerät nach Anspruch 1, **dadurch gekennzeichnet, dass** die Andrück- und Antriebsrolle (9) in Bezug zur Heizeinrichtung (4) in der Höhe und/oder im Abstand einstellbar ist.

3. Handschweißgerät nach Anspruch 1 oder 2, **dadurch gekennzeichnet, dass** eine Führungshilfe (15) zur Verringerung der Verkantung der Andrück- und Antriebsrolle (9) während des Schweißablaufes vorgesehen ist.

4. Handschweißgerät nach Anspruch 3, **dadurch gekennzeichnet, dass** als Führungshilfe eine Stützrolle (15) vorgesehen ist.

5. Handschweißgerät nach Anspruch 1 oder 2, **dadurch gekennzeichnet, dass** die Andrück- und Antriebsrolle (9) pendelnd gelagert ist.

6. Handschweißgerät nach einem der vorangegangenen Ansprüche, **dadurch gekennzeichnet, dass** der Winkel zwischen Überlappungskante und Andrück- und Antriebsrolle (9) einstellbar ist.

7. Handschweißgerät nach einem der vorangegangenen Ansprüche, **dadurch gekennzeichnet, dass** die Andrück- und Antriebsrolle (9) gegenüber dem Heizgerät (1) federnd gelagert ist.

8. Handschweißgerät nach einem der vorangegangenen Ansprüche, **dadurch gekennzeichnet, dass** eine Regeleinrichtung (28) vorgesehen ist, die die Drehzahl der Andrück- und Antriebsrolle (9) unabhängig von der Fügekräft konstant hält.

## Claims

1. A handheld welding device with a drive device (5) and a heater unit (1) for welding plastic sealing webs and sheets, which is equipped with a heater device for heating the plastic sealing webs and sheets which are to be welded, **characterised in that** the drive device (5) has an elongate housing (6) with a pressure-exerting and driving roller (9) arranged at the lower end (8), by means of which the joining force can be applied to the plastic sealing webs and sheets in the vertical direction with respect thereto, a motor, which is arranged in the housing (6, 8), for driving the pressure-exerting and driving roller (9), and a coupling unit (7) for connecting the housing (6, 8) to the heater unit (1), in such a manner that the longitudinal axes (16, 17) of the housing (6,8) and of the heater unit (1) run substantially parallel to one another.

2. The handheld welding device as claimed in claim 1, **characterised in that** the height and/or distance of the pressure-exerting and driving roller (9) with respect to the heater device (4) is adjustable.

3. The handheld welding device as claimed in claim 1 or 2, **characterised in that** a guiding aid (15) is provided in order to reduce the tilting of the pressure-exerting and driving roller (9) during the welding process.

4. The handheld welding device as claimed in claim 3, **characterised in that** a supporting roller (15) is provided as guiding aid.

5. The handheld welding device as claimed in claim 1 or 2, **characterised in that** the pressure-exerting and driving roller (9) is mounted in a swinging manner.

6. The handheld welding device as claimed in one of the preceding claims, **characterised in that** the angle between overlap edge and pressure-exerting and driving roller (9) is adjustable.

7. The handheld welding device as claimed in one of the preceding claims, **characterised in that** the pressure-exerting and driving roller (9) is mounted resiliently with respect to the heater unit (1).

8. The handheld welding device as claimed in one of the preceding claims, **characterised in that** a control device (28), which keeps the rotational speed of the pressure-exerting and driving roller (9) constant irrespective of the joining force, is provided.

## Revendications

1. Appareil de soudage à main muni d'un dispositif d'entraînement (5) et d'un appareil de chauffage (1), pour souder des films et bandes d'étanchéité en matière plastique, qui est équipé d'un dispositif de chauffage pour réchauffer les films et bandes d'étanchéité en matière plastique à souder, **caractérisé en ce que** le dispositif d'entraînement (5) présente un boîtier oblong (6) avec un rouleau (9) de pression et d'entraînement disposé à son extrémité inférieure (8), par l'intermédiaire duquel la force d'assemblage peut être exercée sur les films et bandes d'étanchéité en matière plastique en direction perpendiculaire, un moteur disposé dans le boîtier (6, 8) pour entraîner le rouleau (9) de pression et d'entraînement, et une unité d'accouplement (7) pour accoupler le boîtier (6, 8) à l'appareil de chauffage (1) de telle sorte que les axes longitudinaux (16, 17) du boîtier (6, 8) et de l'appareil de chauffage (1) s'étendent sensiblement en parallèle.

2. Appareil de soudage à main selon la revendication 1, **caractérisé en ce que** le rouleau (9) de pression et d'entraînement est réglable en hauteur et/ou en distance par rapport au dispositif de chauffage (4).

3. Appareil de soudage à main selon la revendication 1 ou 2, **caractérisé en ce qu'**il est prévu une aide de guidage (15) pour réduire le gauchissement du rouleau (9) de pression et d'entraînement pendant le déroulement du soudage.

4. Appareil de soudage à main selon la revendication 3, **caractérisé en ce qu'**un rouleau de soutien (15) est prévu comme aide de guidage.

5. Appareil de soudage à main selon la revendication 1 ou 2, **caractérisé en ce que** le rouleau (9) de pression et d'entraînement est monté flottant.

6. Appareil de soudage à main selon l'une des revendications précédentes, **caractérisé en ce que** l'angle entre le bord de recouvrement et le rouleau (9) de pression et d'entraînement est réglable.

7. Appareil de soudage à main selon l'une des revendications précédentes, **caractérisé en ce que** le rouleau (9) de pression et d'entraînement est monté élastiquement par rapport à l'appareil de chauffage (1).

8. Appareil de soudage à main selon l'une des revendications précédentes, **caractérisé en ce qu'**il est prévu un dispositif de régulation (28) qui maintient constante la vitesse de rotation du rouleau (9) de pression et d'entraînement indépendamment de la force d'assemblage.
